# EUROPÄISCHE PATENTSCHRIFT

(11) **EP 2 183 971 B1**
(45) Veröffentlichungstag und Bekanntmachung des Hinweises auf die Patenterteilung: **12.04.2017**
(21) Anmeldenummer: 09012837.2
(22) Anmeldetag: 10.10.2009
(51) Int. Cl.: A21B 3/07, A21C 9/08

(54) **Anordnung zum Verfahren von Tuchabziehapparaten auf einem Beschickungswagen**
SYSTEM FOR MOVING BAKERY CLOTH CONVEYORS FROM A LOADING CAR
ARRANGEMENT POUR DEPLACEMENT DE DISPOSITIFS DE TRANSFER SUR UN CHARIOT

(30) Priorität: 23.10.2008 DE 202008014112 U
(43) Veröffentlichungstag der Anmeldung: 12.05.2010
(73) Patentinhaber: Karl Ahlborn Maschinenfabrik KG, 37247 Großalmerode (DE)
(72) Erfinder: Ahlborn, Detlef, Dr.-Ing., 37247 Grossalmerode (DE); Hinkelmann, Frank, 37247 Grossalmerode (DE)
(74) Vertreter: Patentanwälte Walther Hinz Bayer PartGmbB

(56) Entgegenhaltungen:
- WO-A2-2007/051645
- DE-A1- 3 840 163
- DE-A1- 19 927 645
- DE-U1- 29 909 568

## Beschreibung

Die vorliegende Erfindung betrifft eine Anordnung..... zum Verfahren von Tuchabziehapparaten oder Kipptrögelapparaten auf einem Beschickungswagen, wobei der Beschickungswagen jedem Tuchabziehoder Kipptrögelapparat zugeordnet eine Antriebseinrichtung für den Apparat aufweist.

Nach dem Erstellen des Teiges, z. B. Brötchen oder Brot, werden die daraus geformten Teiglinge auf Tuchabziehapparaten in einem Gärwagen zum Gären zwischengelagert. Der Gärwagen befindet sich hierbei in einem Gärraum, der eine relativ hohe Feuchtigkeit aufweist. Ein solcher Gärwagen stellt sich als ein Gestell mit mehreren Etagen zur Aufnahme von mehreren übereinander angeordneten Tuchabziehapparaten dar. Nach Beendigung des Gärvorgangs müssen die Teiglinge auf die Backfläche in den Backofen überführt werden. Hierfür ist üblicherweise ein zweites Gestell mit ebenfalls übereinander angeordneten mehreren Etagen zur Aufnahme von Backflächen vorgesehen. Dieses Gestell wird dann in den Backofen eingeschoben oder aber das Gestell befindet sich bereits in dem Backofen. In jedem Fall muss eine entsprechende Anzahl der übereinander angeordneten Tuchabziehapparate von dem einen Gestell in das zweite benachbarte Gestell überführt werden. Beim Zurückziehen der Tuchabziehapparate aus diesem zweiten Gestell bewegt sich der eigentliche Tuchabziehapparat relativ zu seinem Tuch, wobei das Tuch in bekannter Weise, ähnlich einem Förderband, von dem Tuchabziehapparat aufgenommen ist. Hierbei gelangen dann die Teiglinge auf die darunter befindliche Backfläche. Das Verschieben der Tuchabziehapparate zum einen von dem Gärwagen in den Backwagen oder Backofen und zum anderen wieder in den Gärwagen ist relativ kraftaufwändig, insbesondere wenn die Tuchabziehapparate voll belegt sind.

Insofern ist bereits aus der DE 10 2005 005 986 A1 eine auf einem gesonderten Gestell angeordnete Vorrichtung bekannt, mittels derer eine Vielzahl von Tuchabziehapparaten gleichzeitig manipuliert werden kann. Dieses Gestell ist verfahrbar und unmittelbar vor beispielsweise einen Beschickungswagen zu stellen, um dann in Eingriff mit den einzelnen Tuchabziehapparaten gebracht zu werden. Dieses Gestell besitzt zwei parallel zueinander angeordnete Scheren, die elektromotorisch gespreizt oder zusammengezogen werden.

Nachteilig an dieser bekannten Vorrichtung ist, dass relativ viel Stellplatz benötigt wird. Insbesondere in kleinen Bäckerein ist ein derartiger Platz in der Backstube häufig nicht vorhanden.

Aus der WO 2007/0151645 A2 ist eine Vorrichtung zum automatischen Einbringen und Entnehmen von Tuchabziehapparaten in einen Backofen bekannt.

Die DE 39 24 021 C zeigt einen Etagenwagen mit mehreren übereinander angeordneten Tuchabziehapparaten, wobei der Wagen eine Verschiebeeinrichtung zum gleichzeitigen Betätigen mehrerer Tuchabziehapparate aufweist. Der Antrieb ist hierbei elektromotorisch ausgebildet, wobei dem Elektromotor ein Spindelantrieb nachgeordnet ist.

Eine im Ergebnis ähnliche Vorrichtung ist aus dem Gebrauchsmuster DE 203 08 777 U1 bekannt; hierbei ist ein Elektromotor vorgesehen, der an der Außenseite eines Etagentragegestells in einem Gehäuse sitzt. Hierbei sind die mehreren Wellen von Tuchabziehapparaten durch einen Riemen miteinander verbunden, wobei an dem Riemen ein elektromotorischer Antrieb angreift.

Die DE 199 27 645 A beschreibt eine Arbeitsstation mit einem pendelbeweglich aufgehängten und aus der Hängeposition manuell in die Arbeitsposition verbringbaren Nagelgerät.

Weiterhin zeigt die DE 38 40 163 A eine Aufhängevorrichtung zur Verbindung einer mit einem Pistolengriff versehenen Handwerkzeugmachine.

Nachteilig an den zuletzt genannten Vorrichtungen ist, dass der elektromotorische Antrieb am Gärwagen befestigt ist. Es wurde bereits zu eingangs erwähnt, dass im Gärraum eine relativ hohe Luftfeuchtigkeit herrscht. Es hat sich herausgestellt, dass es gelegentlich zu Kurzschlüssen in dem elektromotorischen Antrieb des Gärwagens oder Beschickungswagens im Gärraum kommt. Wesentlicher Grund hierfür ist - wie bereits ausgeführt - die hohe Luftfeuchtigkeit.

Nach wie vor ist es allerdings so, und dies wurde auch bereits erwähnt, dass der Kraftaufwand zum manuellen Verschieben der Tuchabziehapparate relativ hoch ist. Das heißt, ein motorischer Antrieb zum Verschieben der einzelnen Tuchabziehapparate oder Kipptrögelapparate ist durchaus wünschenswert, insbesondere wenn man sich vorstellt, dass in manchen Bäckereien eine Vielzahl von Tuchabziehapparaten über den Tag verschoben werden müssen.

Die oben beschriebenen Probleme bestehen nicht nur bei Tuchabziehapparaten, sondern z. B. auch bei Kipptrögelapparaten. Die folgenden Ausführungen gelten insofern nicht nur für Tuchabziehapparate, sondern z. B. auch für Kipptrögelapparate, auch wenn im folgenden der Einfachheit halber nur auf Tuchabziehapparate Bezug genommen wird.

Der Erfindung liegt daher die Aufgabe zugrunde, eine Anordnung umfassend einen Beschickungswagen mit mehreren übereinander angeordneten Tuchabzieh- oder Kipptrögelapparaten der eingangs genannten Art bereitzustellen, mit der ohne Kraftaufwand die einzelnen Tuchabziehapparate manipuliert werden können, wobei die Vorrichtung nicht auf Dauer angelegt mit dem Beschickungswagen verbunden ist.

Eine Anordnung mit einer Vorrichtung, die eine kraftfreie Manipulation der Tuchabziehapparate ermöglicht zeichnet sich erfindungsgemäß dadurch aus, dass die Antriebseinrichtung ein erstes Kupplungsglied aufweist, wobei die Vorrichtung zum Verfahren von Tuchabziehapparaten einen motorischen Antrieb umfasst, der durch ein zweites Kupplungsglied mit dem ersten Kupplungsglied lösbar kuppelbar ist. Erkennbar ist hierbei, dass die Vorrichtung zum Verfahren von Tuchabziehapparaten auf einem Beschickungswagen einen motorischen Antrieb, z. B. einen elektrischen oder einen pneumatischen Antrieb aufweist, wobei diese Vorrichtung zum Manipulieren des jeweiligen Tuchabziehapparates an jedem einzelnen Apparat im Beschickungswagen angedockt wird, dieser Apparat verschoben wird, und dann wieder durch die Vorrichtung mit dem elektrischen Antrieb in den Beschickungswagen zurückgezogen wird.

Hierbei werden die einzelnen z. B. Tuchabziehapparate nacheinander verschoben, wobei jedem Verschiebevorgang ein Andockvorgang durch die Vorrichtung zum Verfahren der Apparate vorangeht. Eine solche Vorrichtung kann ähnlich einem Elektroschrauber oder Pneumatikschrauber an der Decke befestigt sein, möglicherweise in einer Verfahrschiene, und unmittelbar auch über die Decke die Energiezufuhr erhalten.

Nach einem besonderen Merkmal der Erfindung ist vorgesehen, dass die Antriebseinrichtung für den Tuchabziehapparat zwei im Beschickungswagen beabstandet zueinander drehbar gelagerte Rollen umfasst, zwischen denen ein Antriebsmittel, z. B. ein Antriebsriemen, gespannt ist, wobei das erste Kupplungsglied an der einen Rolle drehfest angeordnet ist, und wobei das Antriebsmittel durch einen Mitnehmer mit dem Tuchabziehapparat verbunden ist. Hieraus wird deutlich, dass nach Ankuppelung des motorischen Antriebs der Vorrichtung zum Verfahren von Tuchabziehapparaten der Riemen, der zwischen den beiden Rollen aufgespannt ist, bewegt wird und auf diese Weise der Tuchabziehapparat beispielsweise von einem Beschickungswagen in einen Backwagen überführt wird.

Des Weiteren ist vorteilhaft vorgesehen, dass an dem Beschickungswagen im Bereich des ersten Kupplungsliedes eine Drehmomentenstütze für den motorischen Antrieb vorgesehen ist. Im Einzelnen ist eine solche Drehmomentenstütze als zwei nebeneinander angeordnete nutartige Öffnungen ausgebildet, die beim Andocken der Vorrichtung an das erste Kupplungsglied auf eine Stange aufläuft, so dass bei Betrieb der Vorrichtung die Stange das Drehmoment, das durch beispielsweise den elektromotorischen Antrieb aufgebracht wird, abgefangen wird.

Wesentlich ist des Weiteren, dass der motorische Antrieb eine Positioniersteuerung aufweist. Wie bereits an anderer Stelle erläutert, wird der Tuchabziehapparat über eine bestimmte Wegstrecke von dem Beschickungswagen in beispielsweise einen Backwagen überführt. Hierbei ist wesentlich, dass der Tuchabziehapparat eine genau festgelegte Wegstreckt abfährt. Mit Hilfe einer solchen Positioniersteuerung wird sichergestellt, dass der Motor eine bestimmte Anzahl von Drehungen ausführt und dann stoppt, wobei die Anzahl der Umdrehungen mit der zurückzulegenden Wegstrecke des Tuchabziehapparates korreliert.

Anhand der Zeichnungen wird die Erfindung nachstehend beispielhaft näher erläutert.
- Figur 1: zeigt einen Beschickungswagen in einer Seitenansicht;
- Figur 1a: zeigt einen Ausschnitt aus dem Beschickungswagen in vergrößerter Darstellung;
- Figur 2: zeigt eine Draufsicht auf die Vorrichtung zum Verfahren von Tuchabziehapparaten auf einen Beschickungswagen;
- Figur 3: zeigt perspektivisch die Vorrichtung zum Verfahren von Tuchabziehapparaten mit dem elektromotorischen Antrieb.

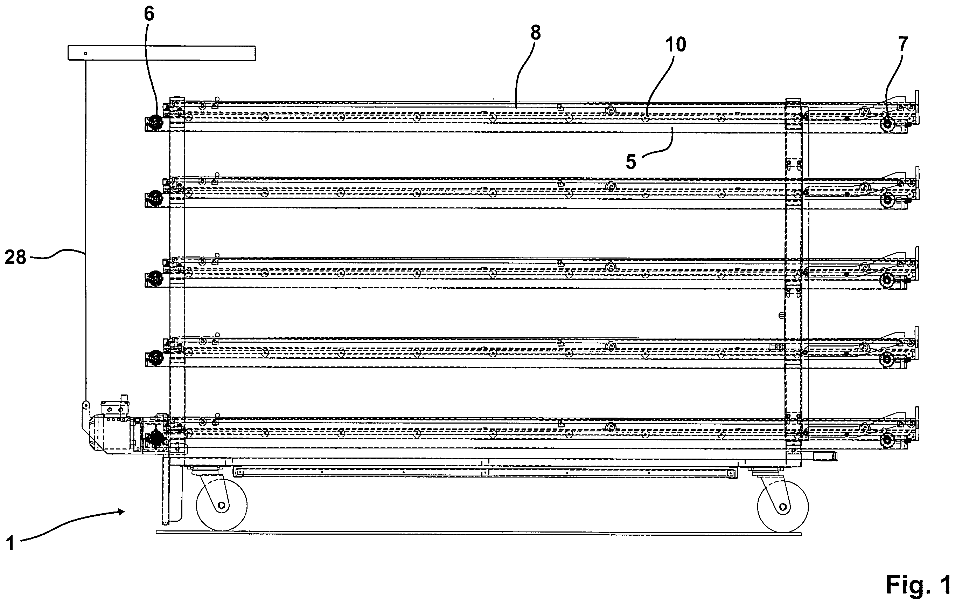

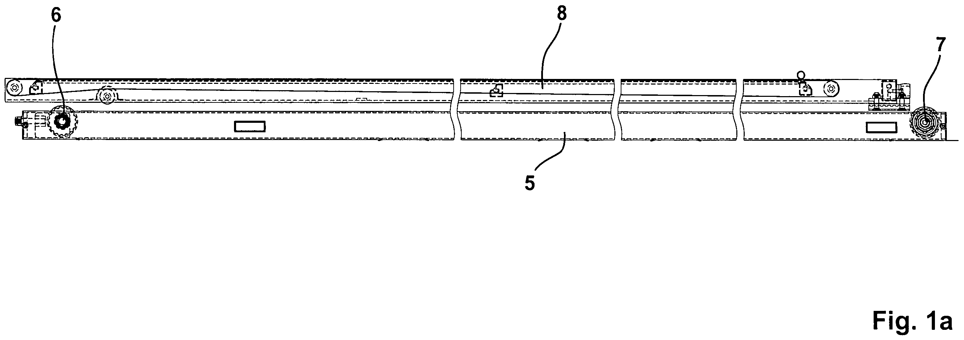

Der in Figur 1 dargestellte Beschickungswagen ist mit 1 bezeichnet. Der Beschickungswagen weist im vorliegenden Fall fünf Etagen auf, wobei jede Etage eine Antriebseinrichtung 5 für den darüber verschiebbar gelagerten Tuchabziehapparat 10 aufweist. Die Antriebseinrichtung 5 umfasst zwei in einem Gestell drehbar angeordnete Rollen 6, 7, zwischen denen ein Riemen 8 gespannt ist, der durch einen Mitnehmer 9 mit dem darüber befindlichen Tuchabziehapparat 10 verbunden ist. Die Art der Verschiebung der Tuchabziehapparate ist aus dem Stand der Technik hinreichend bekannt und muss an dieser Stelle insofern nicht näher erläutert werden. Wesentlich ist lediglich, dass der Tuchabziehapparat in ein weiteres Gestell (nicht dargestellt) überführt wird, wobei bei Zurückziehen des Tuchabziehapparates das Tuch des Tuchabziehapparates eine entsprechend gegenläufige Bewegung durchführt, so dass sich auf dem Tuch des Tuchabziehapparates befindliches Backgut auf die beispielsweise darunter befindliche Backfläche ablagert.

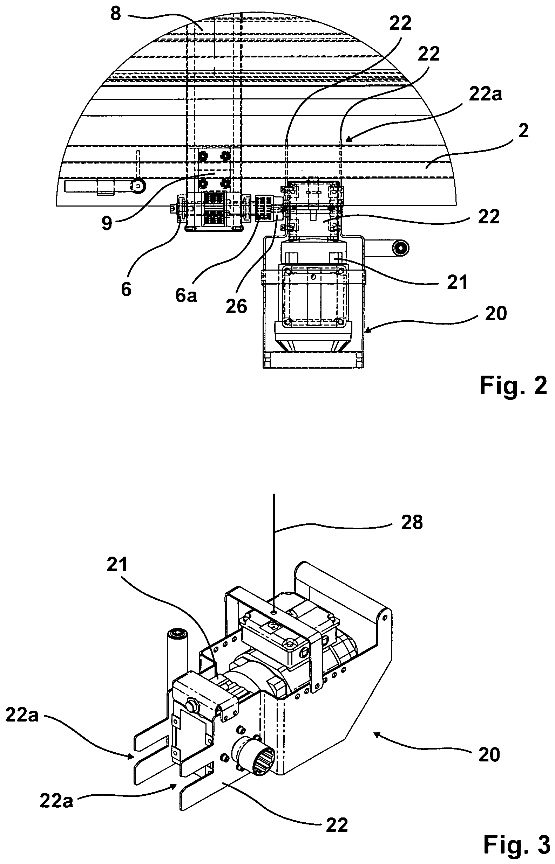

Die Rolle 6 besitzt ein erstes Kupplungsglied in Form eines Sechskantes 6a (Schraubenkopf), wobei die Vorrichtung 20 zum Verfahren von Tuchabziehapparaten 10 einen elektromotorischen Antrieb 21 mit einem Getriebevorsatz 22 aufweist, wobei an dem Getriebevorsatz 22 angeflanscht ein zweites Kupplungsglied 26 befestigt ist, dass sich im einfachsten Fall als eine Werkzeugnuss darstellt, die auf den Sechskant 6a aufsteckbar ist. Die Vorrichtung zum Verfahren von Tuchabziehapparaten 20 besitzt an ihrer Vorderseite eine Drehmomentstütze 22 in Form von zwei beabstandet zueinander angeordneten maulartigen Klauen 22a (Figur 3), wobei durch die maulartigen Klauen ein Stab 2 des Beschickungswagens 1 erfasst wird. Bei Betätigung des elektromotorischen Antriebes wird das hierbei auftretende Moment durch den Stab 2 in Verbindung mit der Drehmomentstütze 22 aufgefangen und durch Rotation des ersten Kupplungsgliedes der Riemen 8 auf der Rollen 6, 7 verfahren.

Die Vorrichtung 20 befindet sich an einem Seil oder Kette 28, das an der Decke eines Gebäudes verschieblich gelagert ist. Dieses Steil oder Kette weist zusätzlich eine Energieversorgung (nicht dargestellt) auf, um die Energiezufuhr zu der Vorrichtung 20 mit dem elektromotorischen Antrieb zu gewährleisten.

## Patentansprüche

1. Anordnung umfassend einen Beschickungswagen (1) mit mehreren übereinander angeordneten Tuchabzieh- oder Kipptrögelapparaten (10), und
einer Vorrichtung (20) zum Verfahren der Tuchabzieh- oder Kipptrögelapparate (10), wobei
der Beschickungswagen jedem Tuchabzieh- oder Kipptrögelapparat (10) zugeordnet eine Antriebseinrichtung für den Tuchabzieh- oder Kipptrögelapparat (10) umfasst, wobei
die Antriebseinrichtung ein erstes Kupplungsglied (6a) aufweist, wobei die Vorrichtung (20) einen motorischen Antrieb (21) umfasst, der
durch ein zweites Kupplungsglied (26) mit dem ersten Kupplungsglied (6a) lösbar kuppelbar ist, **dadurch gekennzeichnet, dass** die Vorrichtung (20) zum Verfahren der Tuchabzieh- oder Kipptrögelapparate (10) an einem Seil oder Kette (28) frei vor dem Beschickungswagen (1) beweglich ist.

2. Anordnung nach Anspruch 1, **dadurch gekennzeichnet,**
**dass** die Antriebseinrichtung (5) für den Tuchabzieh- oder Kipptrögelapparat (10) zwei im Beschickungswagen (1) beabstandet zueinander drehbar gelagerte Rollen (6, 7) umfasst, zwischen denen ein Antriebsmittel, z. B. ein Antriebsriemen (8), gespannt ist, wobei das erste Kupplungsglied (6a) an der einen Rolle (6) drehfest angeordnet ist, und wobei das Antriebsmittel (8) durch einen Mitnehmer (9) mit dem Tuchabzieh- oder Kipptrögelapparat (10) verbunden ist.

3. Anordung nach einem der voranstehenden Ansprüche, **dadurch gekennzeichnet,**
**dass** an dem Beschickungswagen (1) im Bereich des ersten Kupplungsgliedes (6a) eine Drehmomentenstütze (22, 2) für den motorischen Antrieb (21) vorgesehen ist.

4. Anordnung nach einem der voranstehenden Ansprüche, **dadurch gekennzeichnet,**
**dass** der motorische Antrieb (21) eine Positioniersteuerung aufweist.

## Claims

1. A system comprising a charging trolley (1) with several cloth withdrawing or tipping chute apparatuses (10) dispose above one another, and
a device (20) for displacing the cloth withdrawing or tipping chute apparatus (10), wherein
the charging trolley comprises a drive mechanism for each cloth withdrawing or tipping chute apparatus (10) associated the cloth withdrawing or tipping chute apparatus (10), wherein
the drive mechanism comprises a first coupling element (6a), wherein the device (20) comprises a motor drive (21), which can be detachably coupled with the first coupling element (6a) by way of a second coupling element (26), **characterized in that** the device (20) for displacing the cloth withdrawing or tipping chute apparatuses (10) is freely movable in front of the charging trolley (1) on a rope or chain (28).

2. The system according to claim 1,
**characterized in that**
the drive mechanism (5) for the cloth withdrawing or tipping chute apparatus (10) comprises two rollers (6, 7) rotatably mounted in the charging trolley (1) at a distance from one another and between which a driving means, e.g. a transmission belt (8), is tensioned, wherein the first coupling element (6a) is non-rotatably disposed on the one roller (6) and wherein the driving means (8) is connected via a driver (9) with the cloth withdrawing or tipping chute apparatus (10).

3. The system according to one of the afore-mentioned claims,
**characterized in that**
a torque support (22, 2) for the motor drive (21) is provided at the charging trolley (1) in the area of the first coupling element (6a).

4. The system according to one of the afore-mentioned claims,
**characterized in that**
the motor drive (21) comprises a positioning controller.

## Revendications

1. Installation comprenant un chariot de chargement (1) avec plusieurs appareils de retrait de toile ou à support basculant (10), et
un dispositif (20) pour déplacer les appareils de retrait de toile ou à support basculant (10), où
le chariot de chargement comprend pour chaque appareil de retrait de toile ou à support basculant (10) un dispositif d'entraînement associé à l'appareil de retrait de toile ou à support basculant (10), où le dispositif d'entraînement comprend un premier élément d'accouplement (6a), où le dispositif (20) comprend un entraînement motorisé (21) qui est apte à être couplé par un second élément d'accouplement (26) avec le premier élément d'accouplement (6a), **caractérisée en ce que** le dispositif (20) pour déplacer les appareils de retrait de toile ou à support basculant (10) est librement déplaçable devant le chariot de chargement (1) sur une corde ou une chaîne (28).

2. Installation selon la revendication 1,
**caractérisée en ce que**
le dispositif d'entraînement (5) pour l'appareil de retrait de toile ou à support basculant (10) comprend deux rouleaux (6, 7) montés mobiles en rotation à distance l'un de l'autre dans le chariot de chargement (1), entre lesquels est tendu un moyen d'entraînement, par exemple une courroie de transmission (8), où le premier élément d'accouplement (6a) est disposé de manière non mobile en rotation sur l'un des rouleaux (6), et où le moyen d'entraînement (8) est relié avec l'appareil de retrait de toile ou à support basculant (10) par un entraîneur (9).

3. Installation selon l'une des revendications précédentes,
**caractérisée en ce que**
un support de couple (22, 2) pour l'entraînement motorisé (21) est prévu au niveau du chariot de chargement (1) dans la région du premier élément de couplage (6a).

4. Installation selon l'une des revendications précédentes,
**caractérisée en ce que**
l'entraînement motorisé (21) comprend une commande de positionnement.
